# EUROPEAN PATENT SPECIFICATION

(11) **EP 3 783 794 B1**
(45) Date of publication and mention of the grant of the patent: **07.09.2022**
(21) Application number: 20180209.7
(22) Date of filing: 16.06.2020
(51) Int. Cl.: H02P 1/46, H02P 6/16, H02P 6/18, H02P 6/20, H02P 25/026, H02P 25/03

(54) **METHOD AND APPARATUS FOR DETECTING ROTOR MAGNETIC POLE POSITION IN A SINGLE-PHASE BLDC MOTOR**
VERFAHREN UND VORRICHTUNG ZUR ERKENNUNG DER MAGNETPOLPOSITION EINES ROTORS IN EINEM EINPHASIGEN BLDC-MOTOR
PROCÉDÉ ET APPAREIL DE DÉTECTION DE POSITION DE PÔLE DE ROTOR DANS UN MOTEUR BLDC MONOPHASÉ

(30) Priority: 22.08.2019 KR 20190102881
(43) Date of publication of application: 24.02.2021
(73) Proprietor: LG Electronics Inc., Seoul 07336 (KR)
(72) Inventor: YOU, Jae Jun, Seoul 08592 (KR); JUNG, Hansu, Seoul 08592 (KR); KIM, Jaemin, Seoul 08592 (KR)
(74) Representative: Ter Meer Steinmeister & Partner

(56) References cited:
- EP-A1- 3 226 403
- CN-A- 106 160 596
- GB-A- 2 500 013
- KR-A- 20170 126 639
- US-A1- 2005 253 546
- US-A1- 2018 241 333

## Description

### CROSS-REFERENCE TO RELATED APPLICATION(S)

This application claims the benefit of an earlier filing date of and the right of priority to Korean Application No. 10-2019-0102881, filed in Korea on August 22, 2019.

### BACKGROUND

### 1. Technical Field

The present disclosure relates to a method and an apparatus for detecting a position of a magnetic pole of a rotor of a single-phase BLDC motor, and more particularly, to a method and an apparatus for detecting a position of a magnetic pole of a rotor permanent magnet by analyzing a waveform of a current flowing when a high frequency voltage is applied to a single-phase BLDC motor.

### 2. Description of Related Art

An electric motor generally uses an electromagnetic force, and is configured by a stator which is fixed and a rotor which rotates at the inside or the outside of the stator by the electromagnetic force. A DC commutator motor, which is a kind of electric motor, may control the direction of the electromagnetic force by the action of a commutator and a brush, and control the rotating direction of the rotor. However, the DC commutator motor has a shortcoming in that a brush may become worn and an electrical or mechanical noise is generated.

A brushless DC electric (BLDC) motor is a motor which may compensate for the above shortcoming of the DC commutator motor. While the DC commutator motor is configured to control the direction of the electromagnetic force by controlling the direction of current flowing in a rotor coil with a mechanical switch that uses a commutator and a brush, the BLDC motor rotates the rotor using magnetic attractive and repulsive forces by controlling a direction of the current flowing in a stator coil with an electrical switch that uses a driving circuit.

Since the BLDC motor does not have a brush, the brush wearing issue does not arise and the electrical or mechanical noise is low. However, in order to drive a rotor of a motor that has stopped by specifying a rotating direction (hereinafter referred to as initial driving), a position of an N pole or an S pole (hereinafter referred to as a magnetic pole) of a rotor permanent magnet needs to be detected (hereinafter referred to as detection of a position of a rotor magnetic pole), and a timing at which to apply current flowing in a coil needs to be controlled in accordance with the position of the magnetic pole of the rotor permanent magnet.

As related art, Korean Patent Registration No. 10-1256858 discloses a DC motor which detects a position of a rotor permanent magnet using a position detecting device such as a Hall sensor. The Hall sensor may determine whether the magnetic field is an N pole or an S pole by measuring an electromotive force (a Hall voltage) generated by allowing current to flow in a compound semiconductor and applying a magnetic field at a right angle. Therefore, the position of the magnetic pole of the rotor permanent magnet may be detected by measuring the electromotive force (Hall voltage) by the magnetic field of the rotor permanent magnet.

However, when a position detecting sensor such as a Hall sensor is installed, the manufacturing cost of the BLDC motor is increased. Further, space for installing the position detecting sensor is required, resulting in space utilization efficiency being degraded, which makes it difficult to reduce the size of the motor.

In order address the above-mentioned issue, a method and an apparatus for detecting a position of a rotor magnetic pole of a BLDC motor without providing a position detecting sensor (hereinafter referred to as a sensor-less type) are being studied.

As another related art, Korean Patent Application Publication No. 10-2015-0111736 discloses a method for driving a sensor-less BLDC motor which detects a position of a rotor magnetic pole by detecting the reverse electromotive force of one phase where no current flows.

However, since reverse electromotive force is not generated when the rotor is not rotating, in order to determine the initial driving direction of the motor, the motor is arbitrarily driven to generate the reverse electromotive force to detect the rotating direction of the rotor, and then a rotating direction of the rotor is controlled using power switching. Therefore, there is an issue in that in order to drive the motor in a desired rotating direction, an initial driving time is prolonged.

EP 3 226 403 A1 presents a method for detecting rotor position for a single coil DC motor or 2-coil DC motor with non-parallel windings, with no need of Hall position sensor. The method comprises applying a first respectively second probe pulse for generating a first response pulse having a first direction or polarity and a second response pulse having a second direction or polarity. The probe pulses are adapted so they do not substantially move the rotor with respect to the stator, but affect the magnetic properties of the stator. By comparing the measured effects caused by the probe pulses, the initial position of the rotor with respect to the stator is determined. A method for start-up, a motor driver circuit, and a motor assembly comprising said motor and driver circuit are also provided.

GB 2 500 013 A presents a sensorless control system for determining the position of the rotor of a brushless motor comprises a back EMF sensor and a controller. The back EMF sensor generates a digital signal BEMF that is output to the controller, where certain edges of the BEMF signal correspond to zero-crossing in the back EMF. The controller then commutates the phase winding at times relative to these edges. The back EMF sensor comprises a voltage sensor, an amplifier, a differentiator, a low pass filter and a comparator. The back EMF sensor generates a first signal having a voltage that is proportional to a voltage across a winding of the motor, and a second signal having a voltage that is proportional to a current in the winding. The second signal is then differentiated to generate a third signal, and the voltages of the first signal and the third signal are compared. The output signal BEMF is generated in response to the comparison, the output signal having an edge whenever the voltages of the first signal and the third signal correspond.

CN 106 160 596 A discloses a starting method of a single-phase direct-current brushless motor without a position sensor. The starting method includes: pre-positioning; dragging; self-synchronizing. Position of a rotor is determined by detecting counter electromotive force after the rotor is dragged to a preset speed so as to guarantee starting and running of the motor. By the starting method, mounting of the position sensor is not needed, influence of mounting position of the position sensor on running parameters like current, speed, output power and efficiency is avoided, and the circumstance that the motor cannot be started and vibrates at high frequency due to the fact that the mounting position is large in deviation is avoided further.

### SUMMARY OF THE INVENTION

The present invention is defined by the independent method claim 1 and the independent apparatus claim 6. An object of the present disclosure is directed to addressing an issue associated with some related art in which, since a single-phase BLDC motor includes a position detecting sensor to detect a position of a rotor magnetic pole, the manufacturing cost of the motor is increased.

Another object of the present disclosure is further directed to addressing an issue associated with some related art in which, since a single-phase BLDC motor includes a position detecting sensor to detect a position of a rotor magnetic pole, the size of the motor is increased.

Another object of the present disclosure is still further directed to addressing an issue associated with some related art in which, since a single-phase BLDC motor includes a position detecting sensor to detect a position of a rotor magnetic pole, the motor is faced with restrictions in usage environment (such as a temperature or humidity) in which the position detecting sensor can be used.

Another object of the present disclosure is still further directed to addressing an issue associated with some related art in which, when the rotor magnetic pole position detecting method used by a sensor-less single-phase BLDC motor of the related art is used, a time for detecting a position of the rotor magnetic pole is prolonged, resulting in the motor not being precisely operated at a desired timing.

One or more of these objects are solved by the features of the independent claim. The present disclosure is not limited to what has been described above, and other aspects, which are not mentioned above, can be clearly understood by those skilled in the art from the following description.

A method for detecting a rotor magnetic pole of a single-phase BLDC motor according to an embodiment of the present disclosure may detect a position of a rotor magnetic pole of the motor by applying a high frequency voltage to the motor and measuring a change in magnitude of a flowing current.

According to one embodiment, the method may include applying a high frequency voltage to a single-phase BLDC motor, eliminating a high frequency component of a current flowing in the single-phase BLDC motor using a high frequency eliminator and determining a fluctuation direction of a magnitude of the current over time, and detecting a position of a magnetic pole of a rotor of the motor based on a magnetic pole formed in a stator of the motor by the fluctuation direction of the magnitude of the current and a current flowing direction. Determining the fluctuation direction of a magnitude of the current over time may be determining whether a magnitude the current (i.e. the amplitude of the current) flowing in the motor increases or decreases.

According to another embodiment, the method may include: applying a high frequency voltage to the motor; eliminating a high frequency component of a current flowing in the motor; determining whether a magnitude of the current flowing in the motor increases or decreases; and detecting the position of the magnetic pole of the rotor of the motor with respect to a magnetic pole formed in a stator of the motor based on whether the magnitude of the current increases or decreases and based on a current flowing direction.

In the detecting a position of a magnetic pole of a rotor, in response to an increase in the magnitude of the current flowing in a specific, e.g. first, direction, a magnetic pole formed in the stator by the current flowing in the specific direction may be detected to be different from a magnetic pole of the rotor adjacent to the stator. Further, in the detecting a position of a magnetic pole of a rotor, in response to a decrease in the magnitude of the current flowing in the specific direction, a magnetic pole formed in the stator by the current flowing in the specific direction may be detected to be the same as the magnetic pole of the rotor adjacent to the stator.

In the detecting a position of a magnetic pole of a rotor, in response to a decrease in the magnitude of the current flowing in a specific, e.g. first, direction, a magnetic pole formed in the stator by the current flowing in a second direction may be detected to be same as a magnetic pole of the rotor adjacent to the stator. Further, in the detecting a position of a magnetic pole of a rotor, in response to a decrease in the magnitude of the current flowing in a specific, e.g. first, direction, a magnetic pole formed in the stator by the current flowing in the second direction may be detected to be the different as the magnetic pole of the rotor adjacent to the stator. The first direction and the second direction may be different or opposite to each other.

Detecting the position of the magnetic pole of the rotor may comprise: in response to an increase in the magnitude of the current flowing in a first direction, determining that the magnetic pole formed in the stator by the current flowing in the first direction has a different polarity than the magnetic pole of the rotor adjacent to the magnetic pole formed in the stator, and/or in response to a decrease in the magnitude of the current flowing in the first direction, determining that the magnetic pole formed in the stator by the current flowing in the first direction has the same polarity than the magnetic pole of the rotor adjacent to the magnetic pole formed in the stator.

Further, the high frequency eliminator may be a filter.

Further, the high frequency eliminator may be a low pass filter.

Further, the high frequency eliminator may be a first order low pass filter.

Further, the high frequency voltage may have a frequency of 500 Hz or higher.

The high frequency eliminator may be configured to eliminate a component of the current having a frequency of 500 Hz or higher.

A method for driving a single-phase BLDC motor according to another embodiment of the present disclosure may include the method for detecting a rotor magnetic pole of any one of the herein described embodiment and may further comprise the steps of aligning the rotor and driving the motor.

An apparatus for detecting a rotor magnetic pole of a single-phase BLDC motor according to another embodiment of the present disclosure may be configured to perform a method according to any one of the herein described embodiments. In particular the apparatus may be configured to detect a position of a rotor magnetic pole of the motor by applying a high frequency voltage to the motor and measuring a change in magnitude of a flowing current.

In one embodiment, the apparatus may include a high frequency applier configured to apply a high frequency voltage to a single-phase BLDC motor, a current analyzer configured to eliminate a high frequency component of a current flowing in the single-phase BLDC motor using a high frequency eliminator and determine a fluctuation direction of a magnitude of the current over time, and a magnetic pole detector configured to detect a position of a magnetic pole of a rotor of the motor based on a magnetic pole formed in a stator of the motor by the fluctuation direction of the magnitude of the current and a current flowing direction.

In another embodiment, the apparatus may include: a high frequency applier configured to apply a high frequency voltage to the single-phase BLDC motor; a current analyzer comprising a high frequency eliminator configured to eliminate a high frequency component of a current flowing in the motor and a fluctuation determiner configured to determine whether a magnitude of the current flowing in the motor increases or decreases; and a magnetic pole detector configured to detect the position of the magnetic pole of the rotor of the motor with respect to a magnetic pole formed in a stator of the motor based on whether the magnitude of the current increases or decreases and based on a current flowing direction.

The apparatus may comprise: a high frequency applier configured to apply a high frequency voltage to a single-phase BLDC motor; a first order low pass filter through which a current flowing in the motor passes; and a measurer configured to measure a current which passes through the first order low pass filter.

Further, in response to an increase in the magnitude of the current flowing in the specific direction, the magnetic pole detector may be configured to detect a magnetic pole formed in the stator by the current flowing in a specific, e.g. first, direction to be different from a magnetic pole of the rotor adjacent to the stator.

Furthermore, in response to a decrease in the magnitude of the current flowing in the specific direction, the magnetic pole detector may be configured to detect a magnetic pole formed in the stator by the current flowing in the specific direction to be the same as the magnetic pole of the rotor adjacent to the stator.

Further, in response to an increase in the magnitude of the current flowing in a first, i.e. in a specific, direction, the magnetic pole detector may be configured to determine that a magnetic pole formed in the stator by the current flowing in the first direction has a different polarity than a magnetic pole of the rotor adjacent to the magnetic pole formed in the stator; and/or in response to a decrease in the magnitude of the current flowing in the first direction, the magnetic pole detector may be configured to determine that a magnetic pole formed in the stator by the current flowing in the first direction has the same polarity than the magnetic pole of the rotor adjacent to the magnetic pole formed in the stator.

Further, the high frequency eliminator may be a filter.

Further, the high frequency eliminator may be a low pass filter.

Further, the high frequency eliminator may be a first order low pass filter.

Further, the high frequency voltage may have a frequency of 500 Hz or higher.

The high frequency eliminator may be configured to eliminate a component of the current having a frequency of 500 Hz or higher.

A single-phase BLDC motor according to another embodiment of the present disclosure may include the apparatus for detecting a rotor magnetic pole of any herein described embodiment.

Further detailed aspects of the various embodiments of the present disclosure are included in the following detailed description and the drawings.

The method and the apparatus for detecting a position of a rotor magnetic pole of a single-phase BLDC motor according to embodiments of the present disclosure detect a position of a rotor magnetic pole so as to control initial driving of the motor without using a position detecting sensor such as a Hall sensor. Accordingly, the manufacturing cost of the motor can be reduced.

Further, since the position of the rotor magnetic pole which controls the initial driving of the motor is detected without using a position detecting sensor such as a Hall sensor, space for installing the position detecting sensor is not required at the time of manufacturing the motor. Therefore, the motor may be manufactured to be small.

Further, since a position detecting sensor such as a Hall sensor is not provided, the motor may be used without being restricted in terms of usage environment such as temperature or humidity.

Further, since a direction of increasing or decreasing the measured magnitude of the current is quickly and accurately measured using a filter, the position of the rotor magnetic pole can be quickly and accurately determined. Therefore, the motor may be quickly and accurately initially driven in a desired direction.

Further, there is no possibility of overcurrent, and a magnetic pole of the rotor may be quickly detected by a simple calculation.

### BRIEF DESCRIPTION OF THE DRAWINGS

The above and other aspects, features, and advantages of the present disclosure will become apparent from the detailed description of the following aspects in conjunction with the accompanying drawings, in which:
FIG. 1 is a view illustrating an example of a single-phase BLDC motor;
FIG. 2 is a flowchart illustrating an example of a method for detecting a position of a rotor magnetic pole of a single-phase BLDC motor of the present disclosure;
FIG. 3 is a flowchart illustrating an example of a high frequency applying step of FIG. 2;
FIG. 4 is a flowchart illustrating an example of a current analyzing step of FIG. 2;
FIG. 5 is a view illustrating an example of a waveform of an offset current of which the magnitude is increased in a positive direction;
FIG. 6 is a view illustrating an example of a waveform of an offset current of which the magnitude is increased in a negative direction;
FIG. 7 is a view illustrating a magnetic flux when a stator magnetic pole formed by a current flowing in a specific direction is the same as a magnetic pole of an adjacent rotor;
FIG. 8 is a view illustrating a magnetic flux when a stator magnetic pole formed by a current flowing in a specific direction is different from a magnetic pole of an adjacent rotor;
FIG. 9 is a view illustrating a relationship between a current flowing in a coil and a flux linkage;
FIG. 10 is a flowchart illustrating a magnetic pole detecting step of FIG. 2;
FIG. 11 is a block diagram illustrating an example of an apparatus for detecting a position of a rotor magnetic pole of a single-phase BLDC motor of the present disclosure;
FIG. 12 is a block diagram illustrating an example of a high frequency applier of FIG. 11;
FIG. 13 is a block diagram of an example of a current analyzer of FIG. 11;
FIG. 14 is a flowchart illustrating an example of an action of a single-phase BLDC motor that is driven by a method and an apparatus for detecting a position of a rotor magnetic pole of a single-phase BLDC motor of the present disclosure; and
FIG. 15 is a view illustrating an example of a device of FIG. 11 which uses a first order low pass filter.

### DETAILED DESCRIPTION

Hereinafter, exemplary embodiments of the present disclosure will be described in detail with reference to the accompanying drawings and contents to be described below. Like reference numerals refer to like elements throughout the specification. In the meantime, the terms used in the present specification are for explaining the embodiments rather than limiting the present invention. Unless particularly stated otherwise in the present specification, a singular form also includes a plural form. The word "comprises" and/or "comprising" used in the present specification will be understood to imply the inclusion of stated constituents, steps, operations, members, components, materials, and/or elements but not the exclusion of one or more of constituents, steps, operations, members, components, materials, and/or elements.

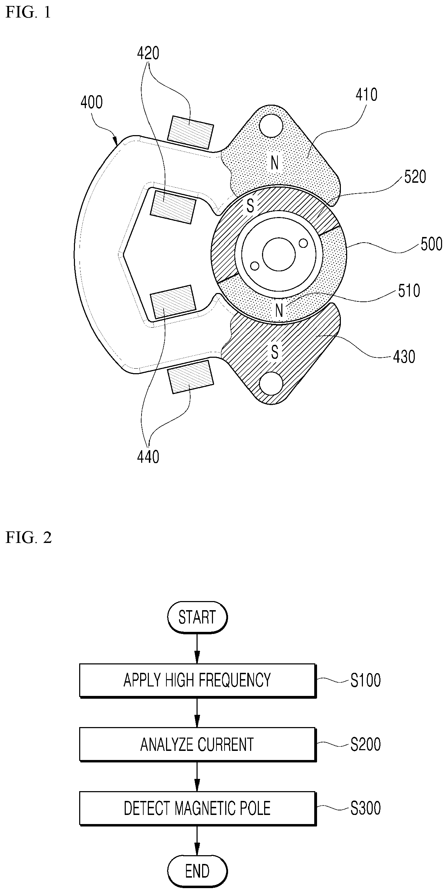

FIG. 1 is a view illustrating an example of a single-phase BLDC motor.

A configuration of a single-phase BLDC motor (hereinafter referred to as a BLDC motor) in which a method for detecting a rotor magnetic pole of a single-phase BLDC motor according to an embodiment of the present disclosure is used will be described with reference to FIG. 1.

Referring to FIG. 1, the BLDC motor includes a stator 400 and a rotor 500.

The stator 400 may rotate the rotor 500 by magnetic attractive force and repulsive force, and may include a first stator 410, a first coil 420 wound around the first stator 410, a second stator 430, and a second coil 440 wound around the second stator 430.

The first coil 420 and the second coil 440 are connected to each other, and a current supplied to the BLDC motor flows therethrough. When the first coil 420 and the second coil 440 are connected and operated, a phase number of the motor, which is the number of coils that operate independently, becomes one, and the BLDC motor may thereby become a single-phase BLDC motor.

The first stator 410 and the second stator 430 (hereinafter referred to as stators) may become an electromagnet having an N pole or an S pole depending on the direction of the current flowing in the first coil 420 and the second coil 440. When the first stator 410 and the second stator 430 are an electromagnet, the first stator 410 and the second stator 430 may be configured to have different magnetic poles. For example, when current flows in the first coil 420 and the second coil 440, the first stator 410 may have an N pole and the second stator 430 may have an S pole.

The rotor 500 may have a cylindrical or spherical shape, and may include a rotor N pole 510 having an N pole and a rotor S pole 520 having an S pole such that the rotor 500 rotates by torque caused by an attractive force or a repulsive force with the stator magnetic poles.

For example, referring to FIG. 1, when the first stator 410 has an N pole, the second stator 430 has an S pole, the rotor N pole 510 is adjacent to the second stator 430 at an incline in a counterclockwise direction, and the rotor S pole 520 is adjacent to the first stator 410 at an incline in the counterclockwise direction, the rotor 500 may start rotating in a clockwise direction. This is because the magnetic attractive force works on the N pole of the first stator 410 and the rotor S pole 520 in the clockwise direction and the magnetic attractive force works on the S pole of the second stator 430 and the rotor N pole 510 in the clockwise direction.

According to this principle, the magnetic pole of the first stator 410 and the magnetic pole of the second stator 430 sequentially change, such that the magnetic attractive force or repulsive force appropriately works on the magnetic pole of the rotor 500 to rotate the rotor 500.

Hereinafter, the method for detecting a rotor magnetic pole of a single-phase BLDC motor according to an embodiment of the present disclosure will be described.

FIG. 2 is a flowchart illustrating an example of a method for detecting a position of a rotor magnetic pole of a single-phase BLDC motor of the present disclosure.

Referring to FIG. 2, one embodiment of a method for detecting a rotor magnetic pole of a single-phase BLDC motor of the present disclosure is a method for detecting a magnetic pole of the rotor 500 that is adjacent to the first stator 410 and the second stator 430, in order to control a rotating direction when a BLDC motor that is stopped is initially driven (hereinafter referred to as an initial rotating direction), and may include a high frequency applying step S100 of applying a high frequency voltage, a current analyzing step S200 of analyzing an offset current, and a magnetic pole detecting step S300 of detecting a position of a magnetic pole.

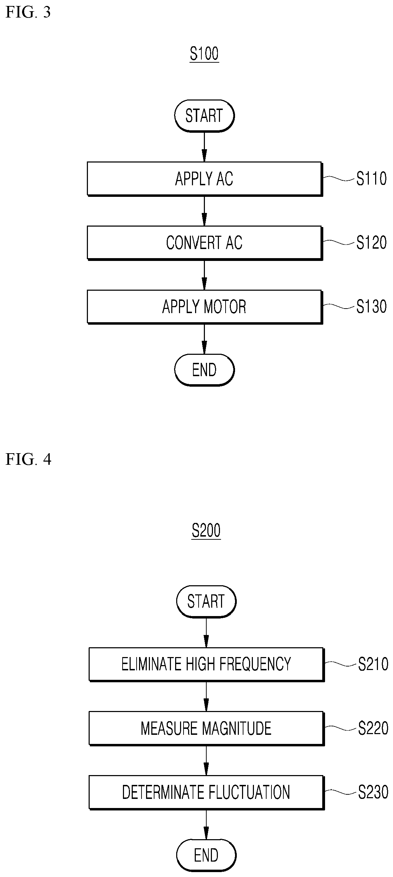

FIG. 3 is a flowchart illustrating an example of the high frequency applying step of FIG. 2.

First, the high frequency applying step S100 will be described with reference to FIG. 3.

Referring to FIG. 3, the high frequency applying step S100 may include an AC applying step S110 of applying a high frequency voltage and an AC voltage to the BLDC motor, an AC converting step S120 of converting the AC voltage into a high frequency voltage, and a motor applying step S130 of applying a high frequency voltage to the motor.

In the AC applying step S110, an AC voltage is applied to a converter. The AC voltage that is applied to the converter may be converted into a voltage appropriate for detecting a position of a rotor magnetic pole of the BLDC motor.

In the AC converting step S120, the AC voltage applied to the converter is converted into a high frequency voltage. The converter may convert an applied voltage into an AC voltage or a DC voltage or convert a frequency of the applied voltage. The high frequency voltage used for the method for detecting a rotor magnetic pole of the single-phase BLDC motor of the present disclosure may have a frequency of 500 Hz or higher.

In the motor applying step S130, in order for the current to flow into the BLDC motor in a state in which the rotor 500 is stopped and is not rotating, the high frequency voltage is applied to the BLDC motor.

Specifically, when the high frequency voltage is applied to the BLDC motor, the direction of the current flowing into the BLDC motor is rapidly alternately switched, such that the magnetic poles of the first stator 410 and the second stator 430 are also rapidly alternately switched. Accordingly, the rotor 500 does not receive a magnetic attractive force or repulsive force, which is torque for rotation, for a sufficient time to be rotated, and the rotor 500 thus does not rotate but is maintained in a stopped state. Therefore, the position of the magnetic pole of the rotor 500 that is detected by applying a voltage to the BLDC motor may be maintained to be the same before and after applying the voltage.

FIG. 4 is a flowchart illustrating an example of the current analyzing step of FIG. 2.

Next, the current analyzing step S200 will be described with reference to FIG. 4.

The current analyzing step S200 may include a high frequency eliminating step S210 of analyzing a characteristic of a current flowing in the BLDC motor (hereinafter referred to as an offset current) in order to detect a magnetic pole of the rotor 500 adjacent to the stator, and blocking or attenuating a high frequency component of the offset current (hereinafter referred to as eliminating a high frequency component). The current analyzing step S200 may further include a magnitude measuring step S220 of measuring a magnitude of the offset current and a fluctuation determining step S230 of determining an increasing direction of the offset current.

The reason that the offset current is analyzed as described above is to detect a position of the magnetic pole of the rotor 500 adjacent to the stator by measuring a change in a magnitude of the offset current. When current flows in the BLDC motor, the magnitude of the offset current is changed due to the influence of the magnetic pole of the rotor 500 adjacent to the stator.

In the high frequency eliminating step S210, a high frequency component of the offset current is eliminated. When the high frequency voltage is applied to the BLDC motor, the offset current also includes a high frequency component, and the offset current thus has a complicated shape. Therefore, when the high frequency component of the offset current is eliminated, the offset current has a simple shape, and the characteristic of the offset current may thus be more easily determined.

In addition, in the high frequency applying step S100, when a voltage having a frequency of 500 Hz or higher is applied to the BLDC motor, if a component having a specific frequency or higher is eliminated in the high frequency eliminating step S210, the specific frequency is desirably 500 Hz or lower.

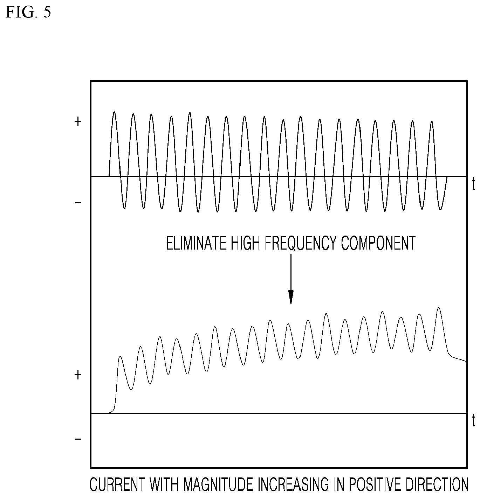

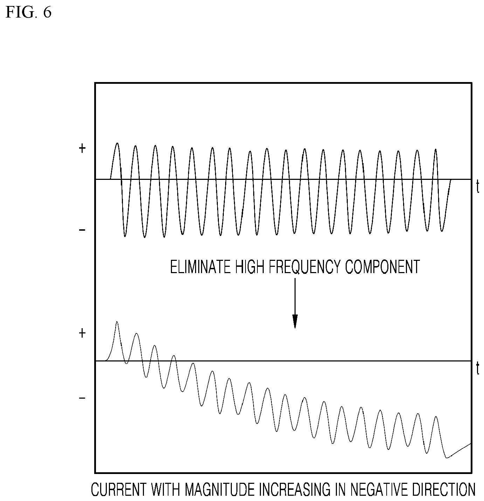

FIG. 5 is a view illustrating an example of a waveform of an offset current of which the magnitude is increased in a positive direction, and FIG. 6 is a view illustrating an example of a waveform of an offset current of which the magnitude is increased in a negative direction.

Specifically, when the offset current is passed through a high frequency eliminator such as a filter so as to eliminate a high frequency component of the offset current, as illustrated in the graphs illustrated in lower portions of FIGS. 5 and 6, a waveform which represents the characteristic of the offset current is simply illustrated, and the characteristic of the offset current may thus be more easily identified. The filter may be a low pass filter of a first order or a higher order.

In the magnitude measuring step S220, a magnitude of the offset current is measured. Since the offset current is an alternating current, the direction thereof changes according to a predetermined cycle. For example, as illustrated in FIGS. 5 and 6, the offset current may flow while changing direction to a positive direction (+) and a negative direction (-) according to a predetermined cycle over time (t).

Therefore, in the magnitude measuring step S220, as illustrated in FIGS. 5 and 6, the offset current is graphed in terms of displacement over time (t) to measure a magnitude of the offset current in a positive direction (+) or a magnitude in a negative direction (-). When the magnitude measuring step S220 is performed after the high frequency eliminating step S210, the offset current may be graphed as illustrated in the lower portions of FIGS. 5 and 6.

The order of the magnitude measuring step S220 and the high frequency eliminating step S210 may be switched. For example, when the high frequency eliminating step S210 is performed after measuring the magnitude of the offset current in the magnitude measuring step S220, the graphs illustrated in the upper portions of FIGS. 5 and 6 may be illustrated first and the graphs illustrated in the lower portions of FIGS. 5 and 6 obtained by eliminating a high frequency component of the offset current may be illustrated thereafter.

In the fluctuation determining step S230, an increased or decreased direction of the magnitude of the offset current is determined based on the magnitude of the offset current measured in the magnitude measuring step S220.

For example, referring to FIG. 5, it may be determined that the magnitude of the offset current is increased in a positive direction (+) (or decreased in a negative direction (-)) as compared with a general alternating current. The change in the magnitude of the offset current may be determined using the graph illustrated in the upper portion of FIG. 5, which is obtained without performing the high frequency eliminating step S210, or may more efficiently be determined using the graph illustrated in the lower portion of FIG. 5 which is obtained by performing the high frequency eliminating step S210.

As another example, referring to FIG. 6, it may be determined that the magnitude of the offset current is increased in a negative direction (-) (or decreased in a positive direction (+)) as compared with a general alternating current. The change in the magnitude of the offset current may be determined using the graph illustrated in the upper portion of FIG. 6, which is obtained without performing the high frequency eliminating step S210, or may more efficiently be determined using the graph illustrated in the lower portion of FIG. 6 which is obtained by performing the high frequency eliminating step S210.

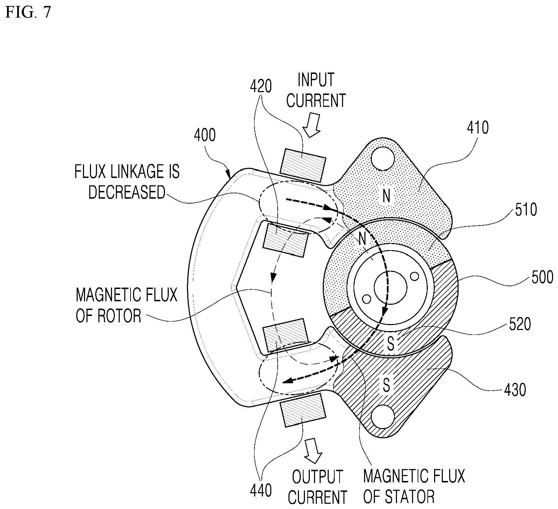

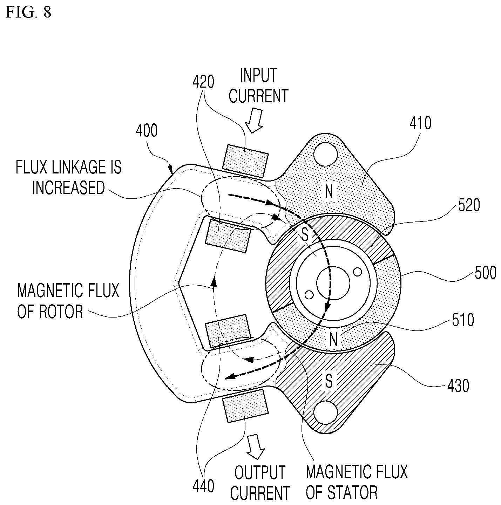

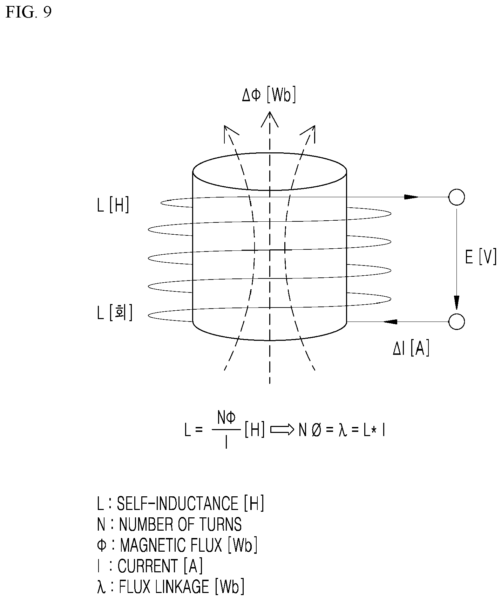

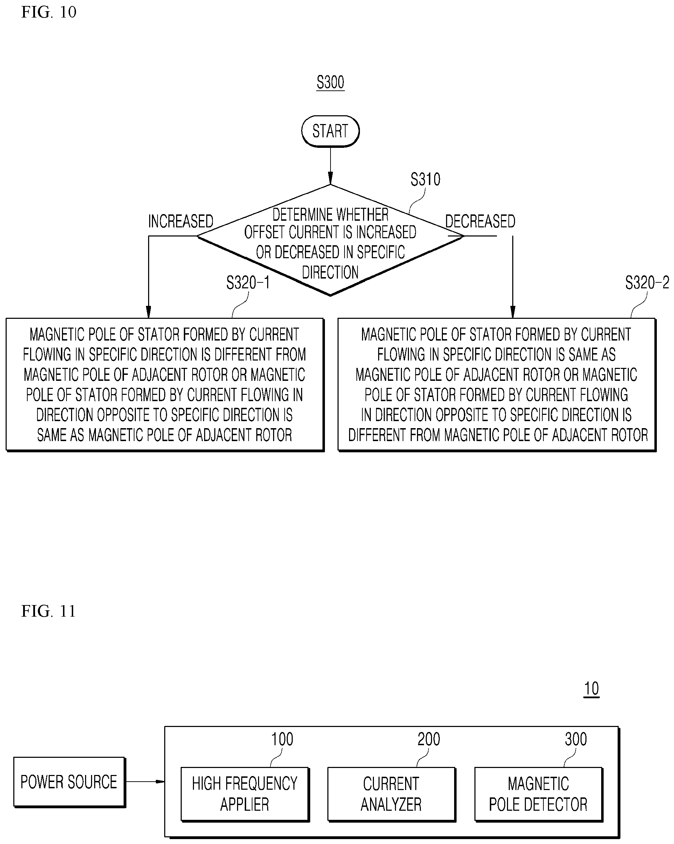

FIG. 7 is a view illustrating a magnetic flux when a stator magnetic pole formed by a current flowing in a specific direction is the same as a magnetic pole of an adjacent rotor. FIG. 8 is a view illustrating a magnetic flux when a stator magnetic pole formed by a current flowing in a specific direction is different from a magnetic pole of an adjacent rotor. FIG. 9 is a view illustrating a relationship between a current flowing in a coil and a flux linkage. FIG. 10 is a flowchart illustrating a magnetic pole detecting step of FIG. 2.

Next, the magnetic pole detecting step S300 will be described with reference to FIGS. 7 to 10.

In the magnetic pole detecting step S300, it is determined whether the magnetic pole of the rotor 500 adjacent to the stator is an N pole or an S pole using a fluctuation direction of the magnitude of the offset current.

First, an influence of the magnetic pole of the rotor 500 on a magnetic flux formed in a coil wound around the stator will be described with reference to FIGS. 7 and 8.

Referring to FIG. 7 as an example, when current flows in the first coil 420 so that the first stator 410 has an N pole and current flows in the second coil 440 so that the second stator 430 has an S pole, a stator magnetic flux may be formed in the direction as illustrated in FIG. 7. Further, when the rotor N pole 510 is adjacent to the N pole of the first stator 410 and the rotor S pole 520 is adjacent to the S pole of the second stator 430, the rotor magnetic flux may be formed in the direction as illustrated in FIG. 7.

When the magnetic flux is formed as illustrated in FIG. 7, the stator magnetic flux and the rotor magnetic flux which interlink in the first coil 420 and the second coil 440 respectively interlink with each other in opposite directions, such that the flux linkage of the first coil 420 and the second coil 440 is reduced.

Referring to FIG. 8 as an example, when current flows in the first coil 420 so that the first stator 410 has an N pole and current flows in the second coil 440 so that the second stator 430 has an S pole, a stator magnetic flux may be formed in the direction as illustrated in FIG. 8. Further, when the rotor S pole 520 is adjacent to the N pole of the first stator 410 and the rotor N pole 510 is adjacent to the S pole of the second stator 430, the rotor magnetic flux may be formed in the direction as illustrated in FIG. 8.

When the magnetic flux is formed as illustrated in FIG. 8, the stator magnetic flux and the rotor magnetic flux which interlink in the first coil 420 and the second coil 440 respectively interlink with each other in the same direction, such that the flux linkage of the first coil 420 and the second coil 440 are increased.

As a result, when the magnetic pole of the stator formed by the current flowing in a specific direction is the same as the magnetic pole of the adjacent rotor, the flux linkage of the first coil 420 and the second coil 440 is decreased, and when the magnetic pole of the stator formed by the current flowing in a specific direction is different from the magnetic pole of the adjacent rotor, the flux linkage of the first coil 420 and the second coil 440 is increased.

Next, the influence of the flux linkage on the current flowing in the coil will be described.

Referring to FIG. 9, when a current I flows through a coil which is wound around an iron core N times and has a self-inductance L, a magnetic flux Φ may be formed. In this case, a value obtained by multiplying the number N of turns that the coil is wound around the iron core and the magnetic flux Φ is a flux linkage λ The flux linkage λ may be represented by the product of the inductance L and the current I flowing in the coil.

Therefore, since the flux linkage and the current flowing in the coil are proportional, when the flux linkage is reduced, the current flowing in the first coil 420 and the second coil 440 is reduced, and when the flux linkage is increased, the current flowing in the first coil 420 and the second coil 440 is increased.

Next, a method for detecting a magnetic pole of the rotor adjacent to the stator using a fluctuation direction of the magnitude of the offset current will be described with reference to FIG. 10.

Referring to FIG. 10, in the magnetic pole detecting step S300, the polarity of the stator and the rotor 500 adjacent to the stator may be detected based on whether the offset current is increased in a specific direction as determined in the current analyzing step S200 (S320-1 and S320-2).

For example, an increase in the magnitude of the offset current in a specific direction A (for example, a positive direction (+) or a negative direction (-)) is due to the flux linkage of the first coil 420 and the second coil 440 being increased when the current flows in the specific direction A. Therefore, the magnetic pole of the stator formed when the offset current flows in the specific direction A may be detected to be different from the magnetic pole of the rotor 500 adjacent to the stator (S320-1). In other words, the magnetic pole of the stator formed when the offset current flows in an opposite direction to the specific direction A may be detected to be the same as the magnetic pole of the rotor 500 adjacent to the stator (S320-1).

Specifically, in response to an increase in the magnitude of the offset current in the specific direction A and the offset current flowing in the specific direction A, if the first stator 410 has an N pole, the rotor S pole is detected to be adjacent to the first stator 410.

As another example, a decrease in the magnitude of the offset current in a specific direction B (for example, a positive direction (+) or a negative direction (-)) is due to the flux linkage of the first coil 420 and the second coil 440 being decreased when the current flows in the specific direction B. Therefore, the magnetic pole of the stator formed when the offset current flows in the specific direction B may be detected to be the same as the magnetic pole of the rotor 500 adjacent to the stator (S320-2). In other words, the magnetic pole of the stator formed when the offset current flows in an opposite direction to the specific direction B may be detected to be different from the magnetic pole of the rotor 500 adjacent to the stator (S320-2).

Specifically, in response to a decrease in the magnitude of the offset current in the specific direction B and the offset current flowing in the specific direction B, if the first stator 410 has an N pole, the rotor N pole is detected to be adjacent to the first stator 410.

When the position of the magnetic pole of the rotor 500 is detected in the magnetic pole detecting step S300, the rotor 500 may be aligned by being rotated as little as possible, after which the BLDC motor may be initially driven.

Specifically, the magnetic pole of the rotor 500 which is adjacent to the stator and is stopped may be detected, and the rotor 500 may be aligned by being rotated as little as possible by controlling the stator to have a magnetic pole different from the detected magnetic pole of the rotor 500.

The aligned rotor 500 may be rotated by receiving torque caused by the magnetic attractive force or repulsive force in a clockwise direction or a counterclockwise direction in accordance with the conversion of the magnetic pole of the stator.

In contrast, when the rotor 500 is aligned by forming an arbitrary magnetic pole of the stator without detecting a magnetic pole position of the stator 500, if the magnetic pole formed in the stator is the same as the magnetic pole of the rotor 500, the rotor 500 is aligned after rotating until a magnetic pole different from the magnetic pole formed in the stator is adjacent to the stator. Therefore, it takes much time to align the rotor 500 to initially drive the BLDC motor.

Accordingly, by detecting the magnetic pole of the rotor 500 adjacent to the stator, the aligning time of the rotor 500 to initially drive the BLDC motor can be shortened, and machines which use the BLDC motor can be more precisely controlled. Further, by aligning the rotor 500 by rotating the rotor 500 as little as possible, mechanical noise and electrical noise caused by the initial driving of the BLDC motor may be reduced.

Hereinafter, an apparatus for detecting a rotor magnetic pole of a single-phase BLDC motor according to an embodiment of the present disclosure will be described.

FIG. 11 is a block diagram illustrating an example of an apparatus for detecting a position of a rotor magnetic pole of a single-phase BLDC motor of the present disclosure.

Referring to FIG. 11, one embodiment of an apparatus 10 for detecting a rotor magnetic pole of a single-phase BLDC motor of the present disclosure is an apparatus for detecting a magnetic pole of the rotor 500 that is adjacent to the first stator 410 and the second stator 430, in order to control a rotating direction when a BLDC motor that is stopped is initially driven (hereinafter referred to as an initial rotating direction), and may include a high frequency applier 100 which applies a high frequency voltage, a current analyzer 200 which analyzes an offset current, and a magnetic pole detector 300 which detects a position of a magnetic pole.

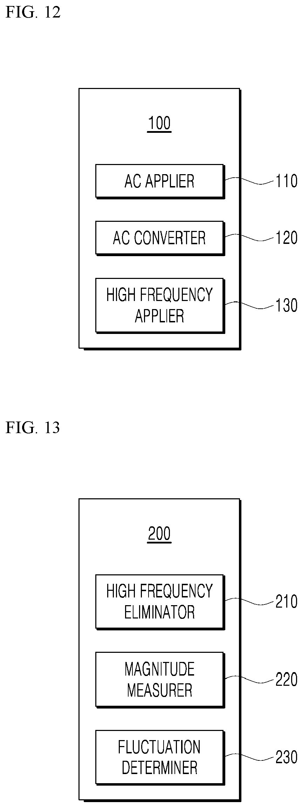

FIG. 12 is a block diagram illustrating the high frequency applier of FIG. 11.

Hereinafter, a detailed configuration of the high frequency applier 100 will be described with reference to FIG. 12.

The high frequency applier 100 may include an AC applier 110 which applies a high frequency voltage to the BLDC motor and applies an AC voltage, an AC converter 120 which converts the AC voltage into a high frequency voltage, and a motor applier 130 which applies a high frequency voltage to a motor.

The AC applier 110 applies an AC voltage to a converter. The AC voltage that is applied to the converter may be converted into a voltage appropriate for detecting a position of a rotor magnetic pole of the BLDC motor.

The AC converter 120 converts the AC voltage applied to the converter into a high frequency voltage. The converter may convert an applied voltage into an AC voltage or a DC voltage or converts a frequency of the applied voltage. The high frequency voltage to be used for the apparatus 10 for detecting a rotor magnetic pole of the single-phase BLDC motor of the present disclosure may have a frequency of 500 Hz or higher.

The motor applier 130 applies the high frequency voltage to the BLDC motor to allow current to flow into the BLDC motor in a state in which the rotor 500 is stopped and is not rotating.

The specific description of the structure in which the rotor 500 does not rotate when the high frequency voltage is applied to the BLDC motor and the current flows is the same as the description of the method for detecting a rotor magnetic pole of the single-phase BLDC motor of the present disclosure described above.

FIG. 13 is a block diagram of an example of the current analyzer of FIG. 11.

Next, a configuration of the current analyzer 200 will be described with reference to FIG. 13.

The current analyzer 200 may include a high frequency eliminator 210 which analyzes a characteristic of a current flowing in the BLDC motor (hereinafter referred to as an offset current) in order to detect the magnetic pole of the rotor 500 adjacent to the stator, and eliminates a high frequency component of the offset current. The current analyzer may further include a magnitude measurer 220 which measures a magnitude of the offset current, and a fluctuation determiner 230 which determines a fluctuation direction of the offset current.

The analysis of the offset current as described above is the same as described in the method for detecting a rotor magnetic pole of the single-phase BLDC motor of the present disclosure described above.

The high frequency eliminator 210 may eliminate a high frequency component of the offset current. When the high frequency voltage is applied to the BLDC motor, the offset current also includes a high frequency component, and the offset current thus has a complicated shape. Therefore, when the high frequency component of the offset current is eliminated, the offset current has a simple shape, and the characteristic of the offset current may thus be more easily determined.

In addition, when the high frequency applier 100 applies a voltage having a frequency of 500 Hz or higher to the BLDC motor, if a component having a specific frequency or higher is eliminated by the high frequency eliminator 210, the specific frequency is desirably 500 Hz or lower.

The specific description of a configuration of eliminating the high frequency component of the offset current so as to easily identify the characteristic of the offset current is the same as the description for the method for detecting a rotor magnetic pole of the single-phase BLDC motor of the present disclosure described above.

The magnitude measurer 220 may measure the magnitude of the offset current. Since the offset current is an alternating current, the direction thereof changes according to a predetermined cycle. For example, as illustrated in FIGS. 5 and 6, the offset current may flow while changing direction to a positive direction (+) and a negative direction (-) according to a predetermined cycle over time (t).

Therefore, the magnitude measurer 220, as illustrated in FIGS. 5 and 6, draws a graph of the offset current in terms of displacement over time (t) to measure a magnitude of the offset current in a positive direction (+) or a magnitude in a negative direction (-). The offset current may be illustrated as the graphs illustrated in lower portions of FIGS. 5 and 6 by the high frequency eliminator 210 and the magnitude measurer 220.

The fluctuation determiner 230 determines an increasing or decreasing direction of a magnitude of the offset current based on the magnitude of the offset current measured by the magnitude measurer 220.

The specific description of a configuration of determining a fluctuation direction of the magnitude of the offset current based on the magnitude of the offset current is the same as the description for the method for detecting a rotor magnetic pole of the single-phase BLDC motor of the present disclosure described above.

Next, the magnetic pole detector 300 will be described with reference to FIGS. 7 to 9.

The magnetic pole detector 300 may determine whether the magnetic pole of the rotor 500 adjacent to the stator is an N pole or an S pole using a fluctuation direction of the magnitude of the offset current.

Specifically, the magnetic pole detector 300 may detect a magnetic pole of the rotor 500 using the principle that the magnitude of the offset current varies in accordance with the magnetic pole of the rotor 500, the detailed description of which is the same as the description of the method for detecting a rotor magnetic pole of the single-phase BLDC motor of the present disclosure described above.

The rotor 500 may be aligned and the BLDC motor may be driven using the detected magnetic pole of the rotor 500, the detailed description of which is the same as the description of the method for detecting a rotor magnetic pole of the single-phase BLDC motor of the present disclosure described above.

Hereinafter, another embodiment of an apparatus for detecting a rotor magnetic pole of a single-phase BLDC motor of the present disclosure using a first order low pass filter will be described.

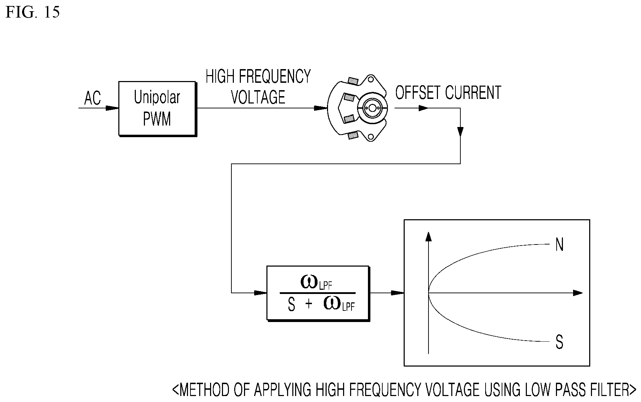

FIG. 15 is a view illustrating an example of an apparatus of FIG. 11 which uses a first order low pass filter.

Referring to FIG. 15, the apparatus for detecting a rotor magnetic pole of a single-phase BLDC motor of the present disclosure may apply a high frequency voltage to the BLDC motor, pass the offset current output from the BLDC motor through the first order low pass filter, and then measure the offset current using a measurer.

The measurer may measure a characteristic of the offset current which passes through the first order low pass filter, and like the magnitude measurer 220 described above may represent the offset current as a graph by measuring a magnitude of the offset current.

The position of the rotor magnetic pole of the BLDC motor may be detected by devices which perform the same functions as the current analyzer 200 and the magnetic pole detector 300 of the apparatus for detecting a position of a rotor magnetic pole of a single-phase BLDC motor of the present disclosure described above based on the offset current measured by the measurer, and the BLDC motor may be driven using the detected position of the rotor magnetic pole of the BLDC motor.

Hereinafter, operations and effects of the method and apparatus for detecting a rotor magnetic pole of a single-phase BLDC motor according to an embodiment of the present disclosure with the above-described configuration will be described.

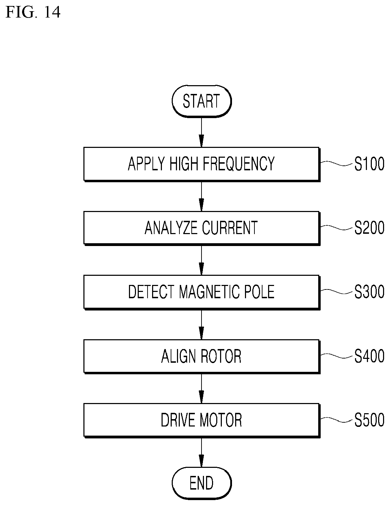

FIG. 14 is a flowchart illustrating an example of an action of a single-phase BLDC motor that is driven by a method and an apparatus for detecting a position of a rotor magnetic pole of a single-phase BLDC motor of the present disclosure.

An action of driving the BLDC motor by a method and apparatus for detecting a position of a rotor magnetic pole of a single-phase BLDC motor of the present disclosure will be described with reference to FIG. 14.

Referring to FIG. 14, a high frequency voltage is applied to the BLDC motor so as to enable detection of a magnetic pole of the rotor adjacent to the stator while the rotor is not rotating (S100).

The magnitude of the offset current flowing in the BLDC motor by the applied high frequency voltage is measured, and the offset current is analyzed by determining whether the measured magnitude of the offset current is increased or decreased in a specific direction (S200).

In response to an increase in the magnitude of the offset current in a specific direction A, the magnetic pole of the stator formed by the current flowing in the specific direction A is detected to be different from the magnetic pole of the adjacent rotor. In contrast, in response to a decrease in the magnitude of the offset current in a specific direction B, the magnetic pole of the stator formed by the current flowing in the specific direction B is detected to be the same as the magnetic pole of the adjacent rotor (S300).

When the position of the magnetic pole of the rotor is detected, the rotor is aligned for initial driving of the BLDC motor. Here, the magnetic pole of the stator is formed to be different from the magnetic pole of the rotor adjacent thereto, and the rotor is aligned by being rotated with a magnetic attractive force (S400).

When the rotor is aligned, the rotor is rotated using torque caused by the magnetic attractive force or repulsive force. For example, when the BLDC motor has an asymmetric air gap, if a magnetic repulsive force is applied to the aligned rotor, the rotor may always rotate in a specific direction C, and if a magnetic attractive force is applied to the aligned rotor, the rotor may always rotate in an opposite direction to the specific direction C. By rotating as described above, the BLDC motor may be initially driven (S500).

As described above, the method and the apparatus for detecting a position of a rotor magnetic pole of a single-phase BLDC motor according to the present disclosure detect a position of a rotor magnetic pole so as to control initial driving of the motor without using a position detecting sensor such as a Hall sensor. Accordingly, the manufacturing cost of the motor can be reduced.

Further, since the position of the rotor magnetic pole which controls the initial driving of the motor is detected without using a position detecting sensor such as a Hall sensor, space for installing the position detecting sensor is not required at the time of manufacturing the motor. Therefore, the motor may be manufactured to be small.

Further, since a position detecting sensor such as a Hall sensor is not provided, the motor may be used without being restricted in terms of usage environment such as temperature or humidity.

Further, since a direction of increasing or decreasing the measured magnitude of the current is quickly and accurately measured using a filter, the position of the rotor magnetic pole can be quickly and accurately determined. Therefore, the motor may be quickly and accurately initially driven in a desired direction.

Although the present disclosure has been described in detail with reference to the exemplary embodiments, those skilled in the art may understand that various modifications of the above-described embodiments can be made without departing from the scope of the present disclosure.

## Claims

1. A method for detecting a position of a magnetic pole of a rotor of a single-phase BLDC motor, the method comprising:
applying (S100) a high frequency voltage having a frequency of 500 Hz or higher to the motor such that the rotor does not receive a magnetic attractive force or repulsive force for a sufficient time to be rotated and is maintained in a stopped state;
eliminating (S210) a high frequency component of an offset current flowing in the motor, wherein the high frequency component eliminated has a frequency of 500 Hz or higher;
determining (S230) whether a magnitude of the offset current flowing in the motor increases or decreases; and
detecting (S300) the position of the magnetic pole of the rotor (500) of the motor with respect to a magnetic pole formed in a stator of the motor based on whether the magnitude of the offset current increases or decreases and based on a current flowing direction;
wherein detecting the position of the magnetic pole of the rotor comprises:
i n response to an increase in the magnitude of the offset current flowing in a specific direction, determining that the magnetic pole formed in the stator by the offset current flowing in the specific direction has a different polarity than the magnetic pole of the rotor adjacent to the magnetic pole formed in the stator, and/or
i n response to a decrease in the magnitude of the offset current flowing in the specific direction, determining that the magnetic pole formed in the stator by the offset current flowing in the specific direction has the same polarity than the magnetic pole of the rotor adjacent to the magnetic pole formed in the stator.

2. The method according to any one of the preceding claims, wherein the high frequency component of the offset current is eliminated (S210) by a high frequency eliminator (210), and wherein the high frequency eliminator (210) is a filter.

3. The method according to claim 2, wherein the high frequency eliminator (210) is a low pass filter.

4. The method according to claim 3, wherein the high frequency eliminator (210) is a first order low pass filter.

5. The method according to any one of the preceding claims, further comprising:
aligning the rotor (500); and
driving the motor.

6. An apparatus for detecting a position of a magnetic pole of a rotor of a single-phase BLDC motor, the apparatus comprising:
a high frequency applier (100) configured to apply a high frequency voltage having a frequency of 500 Hz or higher to the single-phase BLDC motor such that the rotor does not receive a magnetic attractive force or repulsive force for a sufficient time to be rotated and is maintained in a stopped state;
a current analyzer (200) comprising a high frequency eliminator (210) configured to eliminate a high frequency component of an offset current flowing in the motor, wherein the high frequency component eliminated has a frequency of 500 Hz or higher, and a fluctuation determiner (230) configured to determine whether a magnitude of the offset current flowing in the motor increases or decreases; and
a magnetic pole detector (300) configured to detect the position of the magnetic pole of the rotor (50) of the motor with respect to a magnetic pole formed in a stator of the motor (50) based on whether the magnitude of the offset current increases or decreases and based on a current flowing direction;
wherein the magnetic pole detector (300) is configured to:
i n response to an increase in the magnitude of the offset current flowing in a specific direction, determine that a magnetic pole formed in the stator by the offset current flowing in a direction opposite to the specific direction has a same polarity than a magnetic pole of the rotor adjacent to the magnetic pole formed in the stator; and/or
i n response to a decrease in the magnitude of the offset current flowing in the specific direction, determine that a magnetic pole formed in the stator by the offset current flowing in a direction opposite to the specific direction has a different polarity than the magnetic pole of the rotor adjacent to the magnetic pole formed in the stator.

7. The apparatus of claim 6, wherein the high frequency component of the offset current is eliminated (S210) by the high frequency eliminator (210), and wherein the high frequency eliminator (210) is a filter.

8. The apparatus of claim 6, or 7, wherein the high frequency eliminator (210) is a first order low pass filter.

9. The apparatus according to any one of claims 6 to 8, wherein the current analyzer (200) further includes a magnitude measurer (220) configured to measure a magnitude of the offset current, and a fluctuation determiner (230) configured to determine a fluctuation direction of the offset current.

10. A single-phase BLDC motor, including:
a rotor (500);
a stator (400); and
the apparatus according to any one of the claims 6 to 9.

## Patentansprüche

1. Verfahren zum Detektieren einer Position eines Magnetpols eines Rotors eines Einphasen-BLDC-Motors, wobei das Verfahren Folgendes umfasst:
Anlegen (S100) einer Hochfrequenzspannung mit einer Frequenz von 500 Hz oder höher an den Motor, derart, dass der Rotor für eine ausreichende Zeit keine magnetische Anziehungskraft oder Abstoßungskraft, wodurch er gedreht wird, empfängt und in einem angehaltenen Zustand gehalten wird;
Beseitigen (S210) einer Hochfrequenzkomponente eines Offset-Stroms, der im Motor fließt, wobei die beseitigte Hochfrequenzkomponente eine Frequenz von 500 Hz oder höher aufweist;
Bestimmen (S230), ob eine Größe des Offset-Stroms, der im Motor fließt, zunimmt oder abnimmt; und
Detektieren (S300) der Position des Magnetpols des Rotors (500) des Motors in Bezug auf einen Magnetpol, der in einem Stator des Motors gebildet wird, auf der Grundlage davon, ob die Größe des Offset-Stroms zunimmt oder abnimmt, und auf der Grundlage einer Fließrichtung des Stroms;
wobei das Detektieren der Position des Magnetpols des Rotors Folgendes umfasst:
als Antwort auf eine Zunahme der Größe des Offset-Stroms, der in einer bestimmten Richtung fließt, Bestimmen, dass der Magnetpol, der durch den Offset-Strom, der in der bestimmten Richtung fließt, im Stator gebildet wird, eine andere Polarität als der Magnetpol des Rotors, der zu dem im Stator gebildeten Magnetpol benachbart ist, aufweist, und/oder
als Antwort auf eine Abnahme der Größe des Offset-Stroms, der in der bestimmten Richtung fließt, Bestimmen, dass der Magnetpol, der durch den Offset-Strom, der in der bestimmten Richtung fließt, im Stator gebildet wird, dieselbe Polarität wie der Magnetpol des Rotors, der zu dem im Stator gebildeten Magnetpol benachbart ist, aufweist.

2. Verfahren nach einem der vorhergehenden Ansprüche, wobei die Hochfrequenzkomponente des Versatzstroms durch eine Hochfrequenz-Beseitigungseinrichtung (210) beseitigt (S210) wird und wobei die Hochfrequenz-Beseitigungseinrichtung (210) ein Filter ist.

3. Verfahren nach Anspruch 2, wobei die Hochfrequenz-Beseitigungseinrichtung (210) ein Tiefpassfilter ist.

4. Verfahren nach Anspruch 3, wobei die Hochfrequenz-Beseitigungseinrichtung (210) ein Tiefpassfilter erster Ordnung ist.

5. Verfahren nach einem der vorhergehenden Ansprüche, das ferner Folgendes umfasst:
Ausrichten des Rotors (500); und
Antreiben des Motors.

6. Vorrichtung zum Detektieren einer Position eines Magnetpols eines Rotors eines Einphasen-BLDC-Motors, wobei die Vorrichtung Folgendes umfasst:
eine Hochfrequenz-Anlegeeinrichtung (100), die konfiguriert ist, eine Hochfrequenzspannung mit einer Frequenz von 500 Hz oder höher an den Einphasen-BLDC-Motor anzulegen, derart, dass der Rotor für eine ausreichende Zeit keine magnetische Anziehungskraft oder Abstoßungskraft, wodurch er gedreht wird, empfängt und in einem angehaltenen Zustand gehalten wird;
eine Stromanalyseeinrichtung (200), die eine Hochfrequenz-Beseitigungseinrichtung (210), die konfiguriert ist, eine Hochfrequenzkomponente eines Offset-Stroms, der im Motor fließt, zu beseitigen, wobei die beseitigte Hochfrequenzkomponente eine Frequenz von 500 Hz oder höher aufweist, und eine Schwankungsbestimmungseinrichtung (230), die konfiguriert ist zu bestimmen, ob eine Größe des Offset-Stroms, der im Motor fließt, zunimmt oder abnimmt, umfasst; und
einen Magnetpoldetektor (300), der konfiguriert ist, auf der Grundlage davon, ob die Größe des Offsetstroms zunimmt oder abnimmt, und auf der Grundlage einer Fließrichtung des Stroms die Position des Magnetpols des Rotors (50) des Motors in Bezug auf einen Magnetpol, der in einem Stator des Motors (50) gebildet wird, zu detektieren;
wobei der Magnetpoldetektor (300) konfiguriert ist zum:
als Antwort auf eine Zunahme der Größe des Offset-Stroms, der in einer bestimmten Richtung fließt, Bestimmen, dass ein Magnetpol, der durch den Offset-Strom, der in einer
Richtung fließt, die zu der bestimmten Richtung entgegengesetzt ist, im Stator gebildet wird, dieselbe Polarität wie ein Magnetpol des Rotors, der zu dem im Stator gebildeten Magnetpol benachbart ist, aufweist, und/oder
als Antwort auf eine Abnahme der Größe des Offset-Stroms, der in der bestimmten Richtung fließt, Bestimmen, dass ein Magnetpol, der durch den Offset-Strom, der in einer Richtung fließt, die zu der bestimmten Richtung entgegengesetzt ist, im Stator gebildet wird, eine andere Polarität als der Magnetpol des Rotors, der zu dem im Stator gebildeten Magnetpol benachbart ist, aufweist.

7. Vorrichtung nach Anspruch 6, wobei die Hochfrequenzkomponente des Offset-Stroms durch die Hochfrequenz-Beseitigungseinrichtung (210) beseitigt (S210) wird und wobei die Hochfrequenz-Beseitigungseinrichtung (210) ein Filter ist.

8. Vorrichtung nach Anspruch 6 oder 7, wobei die Hochfrequenz-Beseitigungseinrichtung (210) ein Tiefpassfilter erster Ordnung ist.

9. Vorrichtung nach einem der Ansprüche 6 bis 8, wobei die Stromanalyseeinrichtung (200) ferner eine Größenmesseinrichtung (220), die konfiguriert ist, eine Größe des Offset-Stroms zu messen, und eine Schwankungsbestimmungseinrichtung (230), die konfiguriert ist, eine Schwankungsrichtung des Offset-Stroms zu bestimmen, enthält.

10. Einphasen-BLDC-Motor, der Folgendes enthält:
einen Rotor (500);
einen Stator (400); und
die Vorrichtung nach einem der Ansprüche 6 bis 9.

## Revendications

1. Procédé pour détecter une position d'un pôle magnétique d'un rotor d'un moteur BLDC monophasé, le procédé comportant les étapes consistant à :
appliquer (S100) au moteur une tension à haute fréquence ayant une fréquence de 500 Hz ou plus de telle sorte que le rotor ne reçoit pas une force d'attraction ou une force de répulsion magnétique pendant un temps suffisant pour tourner et est maintenu dans un état arrêté ;
éliminer (S210) une composante à haute fréquence d'un courant de décalage circulant dans le moteur, dans lequel la composante à haute fréquence éliminée a une fréquence de 500 Hz ou plus ;
déterminer (S230) si une amplitude du courant de décalage circulant dans le moteur augmente ou diminue ; et
détecter (S300) la position du pôle magnétique du rotor (500) du moteur par rapport à un pôle magnétique formé dans un stator du moteur sur la base de si l'amplitude du courant de décalage augmente ou diminue et sur la base d'un sens de circulation de courant ;
dans lequel la détection de la position du pôle magnétique du rotor comporte les étapes consistant à :
en réponse à une augmentation de l'amplitude du courant de décalage circulant dans un sens spécifique, déterminer que le pôle magnétique formé dans le stator par le courant de décalage circulant dans le sens spécifique a une polarité différente du pôle magnétique du rotor adjacent au pôle magnétique formé dans le stator, et/ou
en réponse à une diminution de l'amplitude du courant de décalage circulant dans le sens spécifique, déterminer que le pôle magnétique formé dans le stator par le courant de décalage circulant dans le sens spécifique a la même polarité que le pôle magnétique du rotor adjacent au pôle magnétique formé dans le stator.

2. Procédé selon l'une quelconque des revendications précédentes, dans lequel la composante à haute fréquence du courant de décalage est éliminée (S210) par un éliminateur de haute fréquence (210), et dans lequel l'éliminateur de haute fréquence (210) est un filtre.

3. Procédé selon la revendication 2, dans lequel l'éliminateur de haute fréquence (210) est un filtre passe-bas.

4. Procédé selon la revendication 3, dans lequel l'éliminateur de haute fréquence (210) est un filtre passe bas d'ordre 1.

5. Procédé selon l'une quelconque des revendications précédentes, comportant en outre les étapes consistant à :
aligner le rotor (500) ; et
entraîner le moteur.

6. Appareil pour détecter une position d'un pôle magnétique d'un rotor d'un moteur BLDC monophasé, l'appareil comportant :
un applicateur de haute fréquence (100) configuré pour appliquer une tension à haute fréquence ayant une fréquence de 500 Hz ou plus au moteur BLDC monophasé de telle sorte que le rotor ne reçoit pas une force d'attraction ou une force de répulsion magnétique pendant un temps suffisant pour tourner et est maintenu dans un état arrêté ;
un analyseur de courant (200) comportant un éliminateur de haute fréquence (210) configuré pour éliminer une composante à haute fréquence d'un courant de décalage circulant dans le moteur, dans lequel la composante à haute fréquence éliminée a une fréquence de 500 Hz ou plus, et un déterminateur de fluctuation (230) configuré pour déterminer si une amplitude du courant de décalage circulant dans le moteur augmente ou diminue ; et
un détecteur de pôle magnétique (300) configuré pour détecter la position du pôle magnétique du rotor (50) du moteur par rapport à un pôle magnétique formé dans un stator du moteur (50) sur la base de si l'amplitude du courant de décalage augmente ou diminue et sur la base d'un sens de circulation de courant ;
dans lequel le détecteur de pôle magnétique (300) est configuré pour :
en réponse à une augmentation de l'amplitude du courant de décalage circulant dans un sens spécifique, déterminer qu'un pôle magnétique formé dans le stator par le courant de décalage circulant dans un sens opposé au sens spécifique a la même polarité qu'un pôle magnétique du rotor adjacent au pôle magnétique formé dans le stator, et/ou
en réponse à une diminution de l'amplitude du courant de décalage circulant dans le sens spécifique, déterminer qu'un pôle magnétique formé dans le stator par le courant de décalage circulant dans un sens opposé au sens spécifique a une polarité différente du pôle magnétique du rotor adjacent au pôle magnétique formé dans le stator.

7. Appareil selon la revendication 6, dans lequel la composante à haute fréquence du courant de décalage est éliminée (S210) par l'éliminateur de haute fréquence (210), et dans lequel l'éliminateur de haute fréquence (210) est un filtre.

8. Appareil selon la revendication 6 ou 7, dans lequel l'éliminateur de haute fréquence (210) est un filtre passe-bas d'ordre 1.

9. Appareil selon l'une quelconque des revendications 6 à 8, dans lequel l'analyseur de courant (200) inclut en outre un mesureur d'amplitude (220) configuré pour mesurer une amplitude du courant de décalage, et un déterminateur de fluctuation (230) configuré pour déterminer un sens de fluctuation du courant de décalage.

10. Moteur BDLC monophasé, incluant :
un rotor (500) ;
un stator (400) ; et
l'appareil selon l'une quelconque des revendications 6 à 9.
